# EUROPÄISCHE PATENTANMELDUNG

(11) **EP 0 758 523 A1**
(43) Veröffentlichungstag der Anmeldung: **19.02.1997**
(21) Anmeldenummer: 96112256.1
(22) Anmeldetag: 30.07.1996
(51) Int. Cl.: A01C 7/08

(54) **Pneumatische Verteilmaschine**

(30) Priorität: 21.09.1995 DE 19535016; 16.08.1995 DE 19530033
(71) Anmelder: Amazonen-Werke H. Dreyer GmbH & Co. KG, D-49205 Hasbergen (DE)
(72) Erfinder: Wiemeyer, Benno, 49504 Lotte-Halen (DE)

(57) **Zusammenfassung**

Pneumatische Verteilmaschine für Saatgut und/oder Dünger oder dgl. mit einem Vorratsbehälter (1), Dosiereinrichtung (3) und Verteilerkopf (4), von dem Verteilerleitungen (9) abgehen, die zu den Säscharen (5) führen, sowie einigen Verteilerleitungen zugeordneten Absperreinrichtungen (15), um Fahrgassenmarkierungen durchzuführen oder Fahrgassen anzulegen. Jede Verteilerleitung weist eine Trennstelle (13) auf.

## Beschreibung

Die Erfindung betrifft eine pneumatische Verteilmaschine gemäß des Oberbegriffes des Patentanspruches 1.

Eine derartige Verteilmaschine ist in der Patentanmeldung P 43 08 125 beschrieben. Bei dieser pneumatischen Verteilmaschine wird das vom zentralen Dosierorgan dosierte Saatgut über eine zentrale Förderleitung zum Verteilerkopf geblasen und von hier über Verteilerleitungen, die vom Verteilerkopf abgehen, zu den Säscharen geführt. Einigen dieser Verteilerleitungen sind Absperreinrichtungen zugeordnet, um Fahrgassenmarkierungen durchzuführen oder Fahrgassen anzulegen. Diese Absperreinrichtungen werden bei der Montage der Verteilmaschine in den Verteilerleitungen der sogenannten Fahrgassensäschare montiert und am Verteilerkopf angeschlossen. Somit lassen sich dann bei der Säarbeit von Saatgut freigehaltene Fahrspuren für die zum Führen des Getreidebestandes notwendigen Folgemaschinen erzeugen.

Diese Folgemaschinen, wie z.B. Düngerstreuer, Feldspritze, werden von den Pflegeschleppern transportiert. Je nach Größe dieser Pflegeschlepper weisen diese Schlepper unterschiedliche Spurweiten auf, so daß zum Erreichen dieser unterschiedlichen Spurweiten die mit den Absperreinrichtungen versehenen Verteilerleitungen mit den entsprechenden Säscharen verbunden werden müssen. Dieses Einstellen auf die unterschiedlichen Spurweiten ist bei den bekannten Maschinen mit einem erheblichen Aufwand verbunden.

Der Erfindung liegt nun die Aufgabe zugrunde, eine universell einsetzbare Verteilmaschine herzustellen.

Diese Aufgabe wird in erfindungsgemäßer Weise durch die kennzeichnende Maßnahme des Anspruches 1 gelöst. Infolge dieser Maßnahmen ist es auf einfachste Weise möglich, Fahrgassenmarkierungen mit den verschiedensten Spurweiten anzulegen.

Dadurch, daß jede Verteilerleitung eine Trennstelle aufweist und aus zwei einzelnen Leitungselementen besteht, lassen sich auf einfachste Weise verschiedene, zu den Säscharen führende Leitungselemente mit den Leitungselementen, in denen Absperreinrichtungen angeordnet sind, verbinden.

Hierbei ist in besonders bevorzugter Weise vorgesehen, daß die Trennstelle als Kupplungseinrichtung ausgebildet ist und die einzelnen Leitungselemente an der Kupplungseinrichtung anschließbar sind. Hierbei weist die Kupplungseinrichtung jeweils einzelne Kupplungen auf, an die die Leitungselemente der Verteilerleitungen einfach anschließbar sind.

In einer weiteren, besonders bevorzugten Ausführungsform ist vorgesehen, daß die Anzahl der vom Verteilerkopf abgehenden Verteilerleitungen veränderbar ist. Hierdurch ist es in besonders einfacher Weise möglich, unterschiedliche Reihenabstände zu erreichen. So ist es z.B. möglich, die Reihenweite durch Abschalten einzelner Säschare zu verdoppeln, verdreifachen usw..

Um auf einfache Weise feststellen zu können, daß in den Verteilerleitungen vom Verteilerkopf zu den Säscharen der Materialfluß einwandfrei ist oder Verstopfungen auftreten, ist vorgesehen, daß zumindest der von dem Verteilerkopf zu der Trennstelle führende Bereich aus einem durchsichtigen Material besteht.

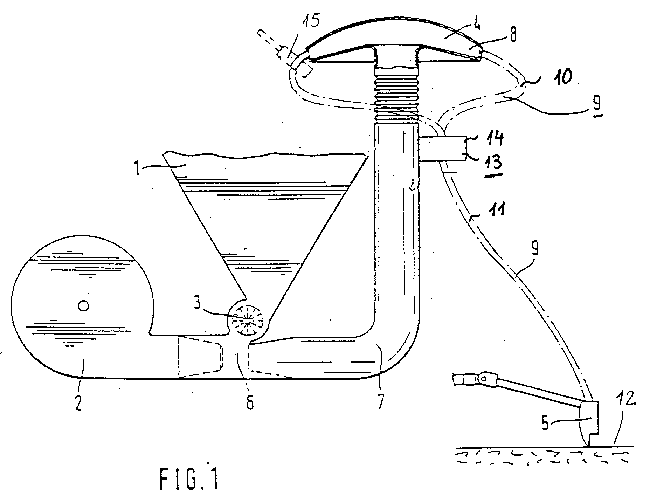

Weitere Einzelheiten der Erfindung sind der Beispielsbeschreibung und den Zeichnungen zu entnehmen. Hierbei zeigen
- Fig.1: das pneumatische Verteilsystem einer Sämaschine in Prinzipdarstellung und

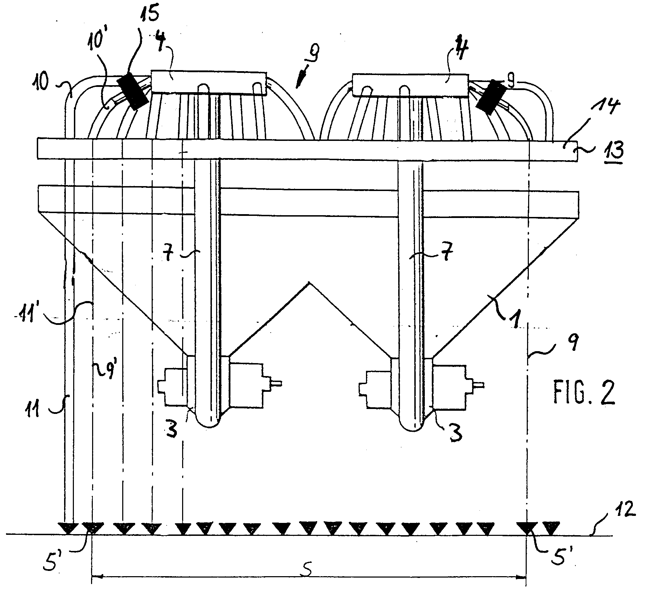

- Fig.2: die Zuordnung der Säschare sowie der Absperrvorrichtung an dem Verteilerkopf einer pneumatischen Verteilmaschine in Prinzipdarstellung.

Die als Sämaschine ausgebildete pneumatische Verteilmaschine weist den Vorratsbehälter 1, das Gebläse 2, das zentrale Dosierorgan 3, den Verteilerkopf 4 und die an dem Rahmen angelenkten Säschare 5 auf. Das sich im Vorratsbehälter 1 befindliche Saatgut wird über das zentrale Dosierorgan 3, welches von einem nicht näher dargestellten Antrieb angetrieben wird, über die Schleuse 6 in die zentrale Förderleitung 7 dosiert, wo es von dem von dem Gebläse 2 erzeugten Luftstrom erfaßt und zum Verteilerkopf 4 geblasen wird. Durch den einstellbaren Antrieb des Dosierorgans 3 läßt sich die auszubringende Menge des Saatgutes oder Düngers variieren und einstellen. An dem Verteilerkopf 4 befinden sich die verschiedenen Ausläufe 8, an denen jeweils die Verteilerleitung 9 angeschlossen ist. Jede dieser Verteilerleitungen besteht aus zwei einzelnen Leitungselementen 10 und 11, und führt jeweils zu einem Säschar 5. Über den Verteilerkopf 4 wird das Saatgut auf die Ausläufe 8 gleichmäßig aufgeteilt und gelangt über die Verteilerleitungen 9 zu den Säscharen 5 mittels derer das Saatgut im Boden 12 abgelegt wird.

Die einzelnen Leitungselemente 10, 10' und 11, 11' sind an der als Trennstelle 13 ausgebildeten Kupplungseinrichtung 14 angeschlossen. Diese Kupplungseinrichtung 14 weist einzelne Kupplungen auf, über die sich die einzelnen Leitungselemente 10, 10' und 11, 11' auf einfache Weise miteinander verbinden lassen.

Sollen nun in gleichmäßigen Abständen beim Ausbringen des Saatgutes Fahrgassen angelegt werden, in dem das zu den Säscharen 5', die als Fahrgassensäschare bezeichnet werden, führenden Verteilerleitungen 9', die aus den einzelnen Leitungselementen 10' und 11' bestehen, das Saatgut über die als Absperrelemente 15 ausgebildeten Absperreinrichtungen beim Anlegen der Fahrgassen abgesperrt werden, werden diese Absperreinrichtungen 15 von der Fahrgassenschalteinrichtung betätigt.

Hierbei weisen die Fahrgassensäschare 5' einen bestimmten Abstand zueinander auf, so daß sich eine bestimmte Spurweite (S) ergibt. Diese Spurweite S läßt sich auf einfachste Weise verändern, in dem die Leitungselemente 10' und 11' der Verteilerleitung 9' an der Trennstelle 13 entkoppelt werden und so jedes beliebige Leitungselement 11 sich mit dem die Absperreinrichtung 15 aufweisenden Leitungselement 10' verbinden läßt. Hierdurch ist es auf einfachste Weise möglich, die Spurweite S zu verkleinern oder zu vergrößern.

Die Leitungselemente 10 und 10', welche in dem Bereich zwischen dem Verteilerkopf 4 und der Trennstelle 13 angeordnet sind, bestehen aus einem durchsichtigen Material. Somit läßt sich sehr einfach der Materialfluß in den Leitungen überwachen bzw. evtl. Verstopfungen feststellen.

## Patentansprüche

1. Pneumatische Verteilmaschine für Saatgut und/oder Dünger oder dgl. mit einem Vorratsbehälter, Dosiereinrichtung und Verteilerkopf, von dem Verteilerleitungen abgehen, die zu den Säscharen führen, sowie einigen Verteilerleitungen zugeordneten Absperreinrichtungen, um Fahrgassenmarkierungen durchzuführen oder Fahrgassen anzulegen, dadurch gekennzeichnet, daß jede Verteilerleitung (9) eine Trennstelle (13) aufweist.

2. Pneumatische Verteilmaschine nach Anspruch 1, dadurch gekennzeichnet, daß jede Verteilerleitung (9) eine Trennstelle (13) aufweist und aus zwei einzelnen Leitungselementen (10 und 11) besteht.

3. Pneumatische Verteilmaschine nach einem oder mehreren der vorstehenden Ansprüche, dadurch gekennzeichnet, daß die Trennstelle (13) als Kupplungseinrichtung (14) ausgebildet ist.

4. Pneumatische Verteilmaschine nach einem oder mehreren der vorstehenden Ansprüche, dadurch gekennzeichnet, daß die einzelnen Leitungselemente (10, 10', 11, 11') an der Kupplungseinrichtung anschließbar sind.

5. Pneumatische Verteilmaschine nach einem oder mehreren der vorstehenden Ansprüche, dadurch gekennzeichnet, daß die Kupplungseinrichtung (14) einzelne Kupplungen aufweist, an die Leitungselemente (10, 10', 11, 11') der Verteilerleitungen einfach anschließbar sind.

6. Pneumatische Verteilmaschine nach einem oder mehreren der vorstehenden Ansprüche, dadurch gekennzeichnet, daß die Anzahl der vom Verteilerkopf (4) abgehenden Verteilerleitungen (9) veränderbar ist.

7. Pneumatische Verteilmaschine nach einem oder mehreren der vorstehenden Ansprüche, dadurch gekennzeichnet, daß zumindest der von dem Verteilerkopf (4) zu der Trennstelle (13) führende Bereich der Verteilerleitungen (10, 10') aus einem durchsichtigen Material besteht.
